# EUROPEAN PATENT APPLICATION

(11) **EP 3 096 579 A1**
(43) Date of publication of application: **23.11.2016**
(21) Application number: 15737022.2
(22) Date of filing: 14.01.2015
(51) Int. Cl.: H04W 72/04, H04W 28/04

(54) **USER TERMINAL, RADIO BASE STATION, AND RADIO COMMUNICATION METHOD**

(30) Priority: 14.01.2014 JP 2014004464
(71) Applicant: NTT DOCOMO, INC., Chiyoda-ku Tokyo 100-6150 (JP)
(72) Inventor: YASUKAWA, Shimpei, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2015/050809
(87) International publication number: WO 2015/108068

(57) **Abstract**

The present invention is designed to realize dynamic TDD that is based on TDD-FDD CA. A user terminal, by employing carrier aggregation or dual connectivity, performs radio communication via a plurality of cells including a primary cell, which is an FDD cell, and a secondary cell, which is a dynamic TDD cell, and has a receiving section that receives control information transmitted from the primary cell, and a cell-specific downlink signal transmitted from the dynamic TDD cell, and a control section that decides whether one or a plurality of subframes in the dynamic TDD cell are uplink subframes or downlink subframes based on the control information, and controls operations with respect to the dynamic TDD cell, and the control section executes control so that a subframe to receive the cell-specific downlink signal from the dynamic TDD cell and a subframe to retransmit uplink data are different.

## Description

### Technical Field

The present invention relates to a user terminal, a radio base station and a radio communication method in a next-generation mobile communication system.

### Background Art

In the UMTS (Universal Mobile Telecommunications System) network, the specifications of long-term evolution (LTE) have been drafted for the purpose of further increasing high speed data rates, providing lower delays and so on (see non-patent literature 1).

In LTE, as multiple access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink).

Also, successor systems of LTE -- referred to as, for example, "LTE-advanced" or "LTE enhancement" -- have been studied for the purpose of achieving further broadbandization and increased speed beyond LTE, and the specifications thereof have been drafted as LTE Rel. 10/11 (LTE-A).

As duplex modes for radio communication in LTE systems and LTE-A systems, there are frequency division duplex (FDD) to divide between the uplink (UL) and the downlink (DL) based on frequency, and time division duplex (TDD) to divide between the uplink and the downlink based on time.

Also, the system band of LTE Rel. 10/11 includes at least one component carrier (CC), where the LTE system band constitutes one unit. Such bundling of a plurality of CCs into a wide band is referred to as "carrier aggregation" (CA).

In carrier aggregation (CA) in LTE Rel. 10/11, the duplex modes to employ in a plurality of CCs have to be the same duplex mode. By contrast with this, for example, in carrier aggregation (CA) of future radio communication systems including LTE Rel. 12 and later versions, a plurality of CCs might employ varying duplex modes. Carrier aggregation (CA) of this type will be hereinafter referred to as "TDD-FDD CA."

In LTE Rel. 12, which is a more advanced successor system of LTE, various scenarios to use a plurality of cells in different frequency bands (carriers) are under study. When the radio base stations to form a plurality of cells are substantially the same, the above-described carrier aggregation (CA) is applicable. On the other hand, when the radio base stations to form a plurality of cells are completely different, dual connectivity (DC) may be employed.

Carrier aggregation (CA) may be referred to as "intra-eNB CA," and dual connectivity may be referred to as "inter-eNB CA."

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"

### Summary of Invention

### Technical Problem

Using TDD-FDD CA as a basis, there is a possibility that dynamic TDD, which is studied under Rel. 12, is used together. Here, the problem when dynamic TDD, which is not limited to UL-DL configurations for secondary cells (SCCs), is employed in TDD-FDD CA and conventional retransmission control (HARQ) is used on an as-is basis, is that data signals cannot be retransmitted at desired timings, PUCCH resources for the primary cell (PCC) run short, and so on.

The present invention has been made in view of the above, and it is therefore an object of the present invention to provide a user terminal, a radio base station and a radio communication method which can realize dynamic TDD that does not rely on TDD UL-DL configurations that are based on TDD-FDD CA.

### Solution to Problem

The user terminal according to one embodiment of the present invention provides a user terminal that, by employing carrier aggregation or dual connectivity, performs radio communication via a plurality of cells including a primary cell, which is an FDD cell, and a secondary cell, which is a dynamic TDD cell, and this user terminal has a receiving section that receives control information transmitted from the primary cell, and a cell-specific downlink signal transmitted from the dynamic TDD cell, and a control section that decides whether one or a plurality of subframes in the dynamic TDD cell are uplink subframes or downlink subframes based on the control information, and controls operations with respect to the dynamic TDD cell, and the control section executes control so that a subframe to receive the cell-specific downlink signal from the dynamic TDD cell and a subframe to retransmit uplink data are different.

### Advantageous Effects of Invention

According to the present invention, it is possible to realize dynamic TDD that does not rely on TDD UL-DL configurations that are based on TDD-FDD CA.

### Brief Description of Drawings

FIGs. 1 provide diagrams to explain an overview of TDD-FDD CA;
FIG. 2 is a diagram to explain existing UL-DL configurations;
FIG. 3 is a diagram to explain an overview of enhanced dynamic TDD according to the present embodiment;
FIGs. 4 provide diagrams to explain LTE-U, using unlicensed bands in LTE;
FIG. 5 is a diagram to show an example in which, in conventional HARQ scheduling, a DL subframe and UL HARQ collide in a dynamic TDD cell;
FIG. 6 is a diagram to show an example of a case where a PUSCH (HARQ-ACK) is transmitted in an SCC to use enhanced dynamic TDD, in an example 3.1 of the present embodiment;
FIG. 7 is a diagram to show an example of a case where a PUCCH (HARQ-ACK) is transmitted in an SCC apart from an SCC using enhanced dynamic TDD, in an example 3.2 of the present embodiment;
FIG. 8 is a diagram to show an example of a schematic structure of a radio communication system according to the present embodiment;
FIG. 9 is a diagram to show an example of an overall structure of a radio base station according to the present embodiment;
FIG. 10 is a diagram to show an example of a functional structure of a radio base station according to the present embodiment;
FIG. 11 is a diagram to show an example of an overall structure of a user terminal according to the present embodiment; and
FIG. 12 is a diagram to show an example of a functional structure of a user terminal according to the present embodiment.

### Description of Embodiments

Now, an embodiment of the present invention will be described below in detail with reference to the accompanying drawings.

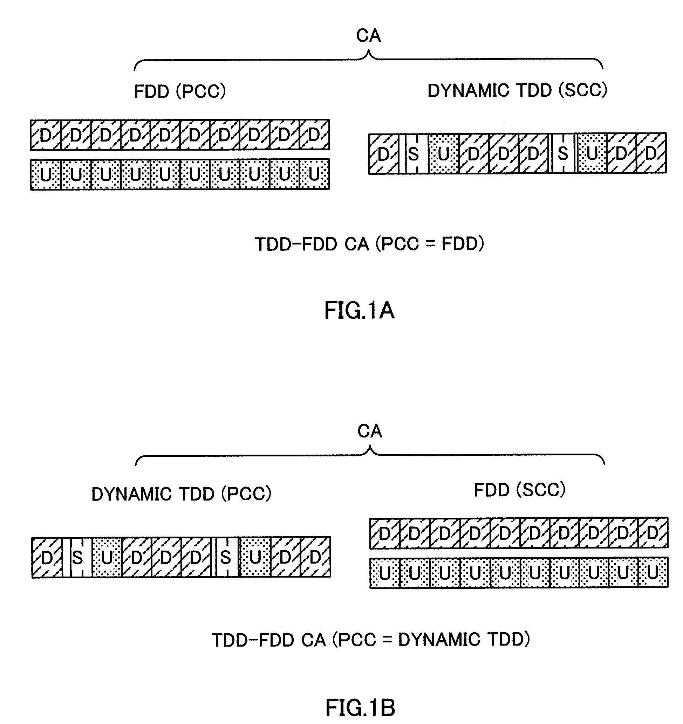

FIGs. 1 provide diagrams to explain an overview of TDD-FDD CA. FIG. 1A shows TDD-FDD CA, in which an FDD carrier is used in the primary cell (PCell (Primary Cell), "PCC," etc.), and a dynamic TDD carrier is used in the secondary cell (SCell (Secondary Cell), "SCC," etc.). FIG. 1B shows TDD-FDD CA, in which a dynamic TDD carrier is used in the primary cell (PCC), and an FDD carrier is used in the secondary cell (SCC). Referring to FIGs. 1, "D" stands for DL subframes, "U" stands for UL subframes, and "S" stands for special subframes.

In FDD, DL assignments and UL grants are transmitted in a physical downlink control channel (PDCCH) or an enhanced physical downlink control channel (EPDCCH) in all DL subframes, and a downlink shared channel (PDSCH: Physical Downlink Shared Channel) is transmitted in the same subframe, or an uplink shared channel (PUSCH: Physical Uplink Shared Channel) is transmitted four ms later.

Also, in FDD, a user terminal tries to receive the PDCCH or the EPDCCH in all DL subframes. The user terminal measures channel quality (CQI: Channel Quality Indicator) and received power (RSRP: Reference Signal Received Power) based on the assumption that reference signals are transmitted in all DL subframes.

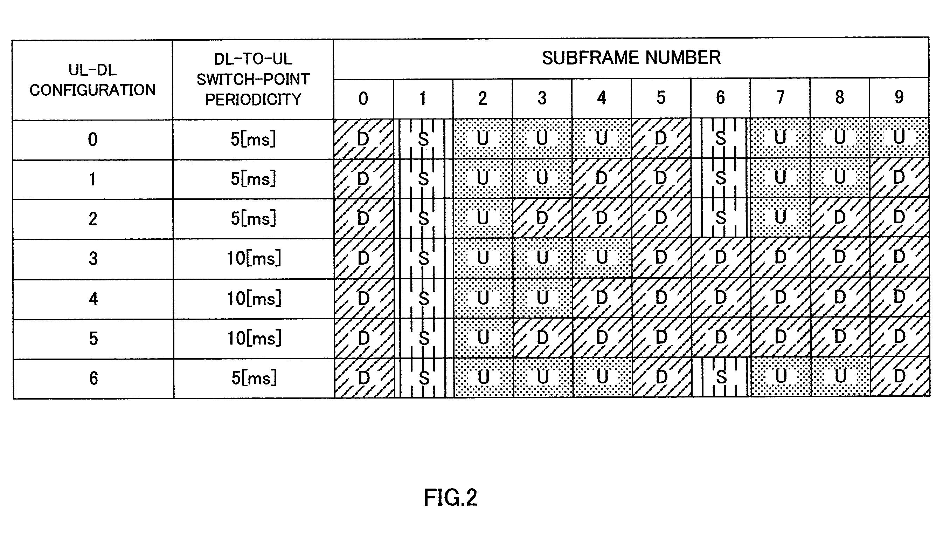

In TDD, the DL subframes to transmit DL assignments and UL grants vary depending on UL-DL configurations, and are limited to specific subframes. As for the UL-DL configurations, to be more specific, seven frame configurations with varying transmission ratios of UL subframes and DL subframes, namely UL-DL configurations #0 to #6, are provided, as shown in FIG. 2. In TDD, the timing to transmit the PDSCH or the PUSCH also varies per UL-DL configuration and subframe number.

In TDD, a user terminal tries to receive the PDCCH or the EPDCCH in specific DL subframes, based on the UL-DL configuration and the special subframe configuration configured. The user terminal assumes that reference signals are transmitted in specific DL subframes, and measures channel quality (CQI), received power (RSRP) and so on based on the UL-DL configuration and the special subframe configuration configured.

In Rel. 12, dynamic TDD (also referred to as "Rel. 12 eIMTA" (enhanced Interference Management and Traffic Adaptation)) to dynamically switch the TDD frame configuration depending on uplink and downlink traffic by switching existing UL-DL configurations dynamically, is under study. For cases in which Rel. 12 dynamic TDD is employed, a study in progress to use semi-static HARQ timings in order to prevent the timing to execute retransmission control (HARQ: Hybrid Automatic Repeat reQuest) from switching dynamically due to dynamic changes of frame configurations.

That is, Rel. 12 dynamic TDD ensures adequate timings for transmitting control information by making the HARQ timing independent from dynamic switching of UL-DL configurations. As for the HARQ transmission timing, for example, there is an ongoing discussion to follow the SIB1 TDD UL-DL configuration on the uplink, and, for the uplink, make selections from the Rel. 8 TDD UL-DL configurations {2, 4, 5}, which are reported by way of higher layer signaling (RRC signaling, broadcast signals, etc.).

Note that delivery acknowledgment signals (also referred to as "retransmission control signals") such as positive acknowledgement (ACK: Acknowledgement) and negative acknowledgement (NACK: Negative ACK) can be used as control information for use in HARQ.

Consequently, when cross-carrier scheduling is executed in TDD-FDD CA, the possibility is high that Rel. 12 dynamic TDD can be supported even if an FDD carrier or a TDD carrier is used in the primary cell (PCC), by placing the HARQ timing in compliance with the above-noted rules.

Generally, macro cells more often operate in FDD, so that, in TDD-FDD CA, the FDD carrier is more likely to be used in the primary cell (PCC). Also, if the TDD carrier has to be used in secondary cells (SCCs), a DL-only carrier, which limits the TDD carrier to use for the secondary cells (SCCs) to the downlink alone, is under study, in order to support the downlink traffic where the volume of communication is heavy compared to the uplink traffic.

The DL-only carrier stipulates one configuration from: (1) ten DL subframes; (2) nine DL subframes and one non-UL subframe; and (3) eight DL subframes and two non-UL subframes, as a new UL-DL configuration in TDD.

The non-UL subframes in above (2) or (3) refer to subframes that do not include UL symbols apart from the uplink pilot time slot (UpPTS) of special subframes. For example, it is possible to use subframes in which part or all of the symbols are made blank and the rest of the symbols are made DL symbols, or use special subframes.

Unlike existing UL-DL configurations, a DL-only carrier has no UL subframe present therein, and therefore is presumed for use as a secondary cell (SCC) in carrier aggregation (CA).

Meanwhile, given that, in an environment where there are a small number of users such as small cells, cases might occur where the uplink traffic increases in bursts, it is preferable if the ratio of UL subframes and DL subframes can be changed by means of dynamic TDD.

However, when a DL-only carrier is applied to secondary cells (SCCs), Rel. 12 dynamic TDD cannot be employed. In Rel. 12 dynamic TDD, UL subframes are switched to DL subframes, dynamically, based on the UL-DL configuration that is reported in SIB1 (System Information Block Type 1). Here, in order to secure backward compatibility, it is not allowed to change DL subframes or special subframes to UL subframes.

Meanwhile, when a user terminal that is incapable of uplink carrier aggregation (UL CA) tries to connect with CCs that employ Rel. 12 dynamic TDD, it is preferable to handle these CCs as DL-only carriers.

Moreover, since UL subframes are always included in Rel. 8 TDD UL-DL configurations, some UL subframes remain as long as Rel. 12 dynamic TDD is employed. Also, Rel. 12 dynamic TDD is subject to limited HARQ timings, and therefore produces significant delays. Consequently, when employing Rel. 12 dynamic TDD, some kind of specification is required.

So, the present inventors have focused on the fact that, when dynamic TDD is designed based on the premise that, in TDD-FDD CA, the FDD carrier is used in the primary cell (PCC), there are always DL subframes and UL subframe that can transmit and receive control information in the primary cell (PCC), and found out a method of implementing enhanced dynamic TDD that is based upon TDD-FDD CA.

Furthermore, the present inventors have discovered that applying conventional retransmission control (HARQ) to TDD-FDD CA-based enhanced dynamic TDD on an as-is basis entails problems such as inability to retransmit data signals at desired timings, shortage of PUCCH resources for the PCC and so on, and found out an HARQ scheduling method that is suitable for enhanced dynamic TDD.

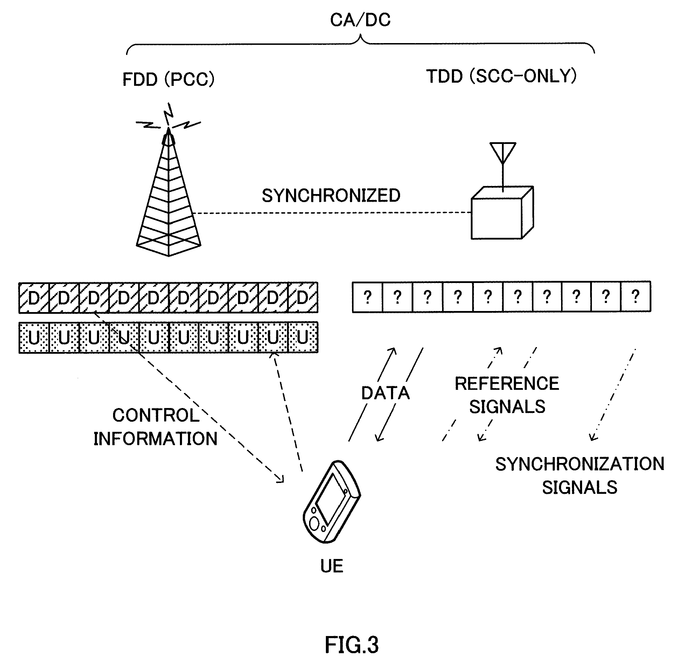

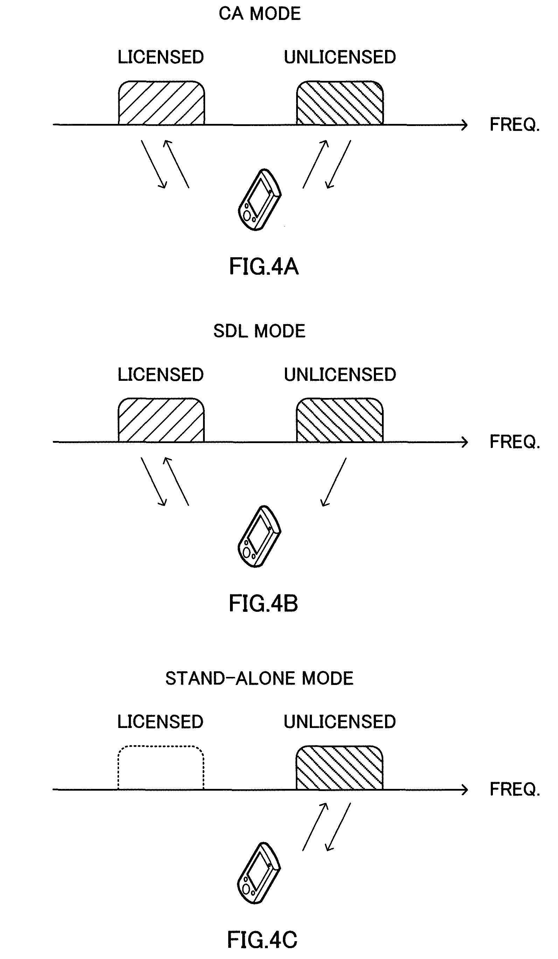

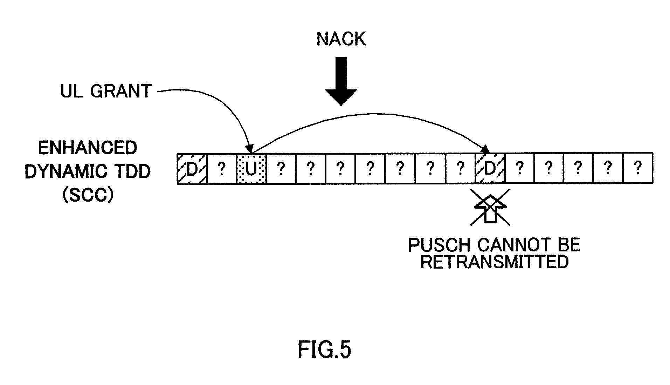

Now, an uplink/downlink subframe configuration method for implementing enhanced dynamic TDD according to the present embodiment will be described with reference to FIGs. 3 and 4 (example 1), and methods of implementing retransmission control (HARQ) in enhanced dynamic TDD according to the present embodiment will be described with reference to FIGs. 5 to 7 (example 2 and example 3).

### (Example 1)

FIG. 3 is a diagram to explain an overview of enhanced dynamic TDD according to an example 1 of the present embodiment. Enhanced dynamic TDD may be thought of as dynamic TDD that is not limited by the UL-DL configuration -- that is, configuration-free.

Note that, in the enhanced dynamic TDD configuration, carrier aggregation (CA) or dual connectivity (DC) may define the relationship between the primary cell (PCC) and secondary cells (SCCs). A case to employ carrier aggregation (CA) will be illustrated in the following description as an example.

Referring to FIG. 3, by transmitting and receiving control information for the dynamic TDD carrier for use as a secondary cell (SCC) in the primary cell (PCC), it becomes possible to implement enhanced dynamic TDD that is more flexible than Rel. 12 dynamic TDD. By transmitting all types of control information using the primary cell (PCC), it becomes possible to, for example, make the transmission and reception of all signals for the secondary cell (SCC) such as data signals, reference signals, synchronization signals and so on dynamically changeable, with high flexibility.

In the secondary cell (SCC), a TDD-based carrier, which uses the uplink and the downlink in time division, is configured in user terminals. In this TDD-based carrier, specific UL-DL configurations and special subframe configurations are not configured as in existing TDD, and, instead, user terminals identify whether each subframe is a UL subframe or a DL subframe based on dynamic commands from the primary cell (PCC). The user terminals may see subframes, in which no command to identify between UL subframes and DL subframes is received, as DL subframes.

To be more specific, the primary cell (PCC) reports to the user terminals whether one or a plurality of subframes in the secondary cell (SCC) are UL subframes or DL subframes, through MAC layer or physical layer signaling. Consequently, it is not necessary to report the UL subframes or DL subframes in the TDD carrier to the user terminals in advance by using information that represents specific UL-DL configurations. The relationship between DL assignments and the PDSCH in terms of their timings or the relationship between UL grants and the PUSCH in terms of their timings may be the same as in the case of FDD, or it is equally to employ other fixed timing relationships and report these by using higher layer signaling (RRC signaling, broadcast signals and so on).

By employing such configurations, it is possible to implement dynamic TDD in which DL subframes are configured continuously and then switch to UL subframes several frames later.

Based on commands from the primary cell (PCC), the user terminals perform measurements in the secondary cell (SCC), CSI (Channel State Information) measurements in the secondary cell (SCC), DL reception in the secondary cell (SCC), including receiving search spaces, control channels, data channels, discovery signals and so on, RACH (Random Access CHannel) transmission in the secondary cell (SCC), UL transmission in the secondary cell (SCC), UCI (Uplink Control Information) feedback in the secondary cell (SCC), and sounding signal transmission in the secondary cell (SCC) and so on.

By commanding these from the primary cell (PCC) to the user terminals, it is possible to control the user terminals in a reliable manner. In the event the primary cell (PCC) is a macro cell and the secondary cell (SCC) is a small cell, if a user terminal moves, the secondary cell (SCC) also changes, so that it is possible to secure better quality by transmitting control signals from the primary cell (PCC), compared to the case where control signals are transmitted from the secondary cell (SCC).

Note that the primary cell (PCC) may use a licensed band that is allocated to the operator, and the secondary cell (SCC) may use a licensed band or use an unlicensed band that, for example, is used in a wireless LAN in compliance with IEEE 802.11 series.

In relationship to unlicensed bands, LTE-U (Unlicensed) to use unlicensed bands in LTE has been proposed. FIG. 4 shows three modes of use of unlicensed bands. To be more specific, FIG. 4A shows carrier aggregation (CA) (or dual connectivity (DC)) mode, FIG. 4B shows supplemental downlink (SDL) mode, and FIG. 4C shows stand-alone mode. Among these, carrier aggregation (CA) mode and supplemental downlink (SDL) mode are both designed so that unlicensed bands are used in secondary cells (SCCs) by using LTE carrier aggregation (CA). There is a possibility that an EPUSCH to use OFDMA as a radio access scheme is used in unlicensed bands, instead of a PUSCH that uses SC-FDMA.

When TDD-FDD CA and an unlicensed band are combined and control information is transmitted in the unlicensed band, the problem is that the quality of the control signals lowers due to collisions with signals of other systems, and/or that transmission opportunities are not secured either. By contrast with this, according to example 1 of the present embodiment, a licensed band is assigned to the primary cell (PCC), so that control information can be transmitted in the licensed band, and the reliability of control information can be secured even when TDD-FDD CA and an unlicensed band are combined.

Also, since the function for providing support for CCs of unlicensed bands can be kept minimal by combining TDD-FDD CA and unlicensed bands, it is possible to reduce the cost of the system. Note that, from the perspective of cost reduction, an approach may be possible to adopt a simple control that uses CCs of unlicensed bands to control these CCs as much as possible. However, in this case, the operation of CCs of unlicensed bands becomes similar to stand-alone operation, which makes it difficult to heighten the level of interference coordination and so on.

When TDD-FDD CA and an unlicensed band are combined and the primary cell (PCC) is made to use FDD, it becomes possible to transmit and receive control information at arbitrary timings.

In an unlicensed band, there is a possibility that strong interference comes from other systems in all timings, so that, by combining the unlicensed band with dynamic TDD, it becomes possible to make the impact of inter-radio base station interference in dynamic TDD relatively low.

Also, cases might occur with licensed bands where a limitation is placed on the application of dynamic TDD in order to prevent interference against neighboring bands. On the other hand, although transmission power may be limited in unlicensed bands, no limitation is placed on the application of dynamic TDD. Consequently, by combining dynamic TDD and unlicensed bands, it becomes possible to allocate maximal UL resources or DL resources in accordance with traffic.

In both cases where TDD-FDD CA and unlicensed bands are combined and where dynamic TDD and unlicensed bands are combined, LTE in unlicensed bands makes use of a non-backward compatible carrier, so that enhancement is allowed on a higher level.

Next, an HARQ scheduling method according to example 1 of the present embodiment, which is suitable for enhanced dynamic TDD, will be described. Below, problems with both HARQ (UL HARQ) in response to uplink data signals and HARQ (DL HARQ) in response to downlink data signals when conventional HARQ scheduling is used, and the HARQ configuration according to the present embodiment will be described in detail.

### (Example 2)

An example 2 according to the present embodiment provides UL HARQ scheduling that is suitable for enhanced dynamic TDD of example 1. The problem when conventional HARQ scheduling is applied to enhanced dynamic TDD is that uplink data (PUSCH) retransmissions and DL subframes collide. Uplink data retransmissions will be hereinafter also referred to as "UL retransmissions" or "PUSCH retransmissions."

As mentioned earlier, in enhanced dynamic TDD in example 1 of the present embodiment, the allocation of uplink/downlink subframes is reported by way of user terminal-specific signaling, thereby realizing highly flexible dynamic TDD. Meanwhile, in enhanced dynamic TDD, cell-specific DL signals (for example, signals for synchronization or quality measurements) need to be transmitted.

As for the method of allocating such cell-specific DL signals to subframes, both periodic allocation of DL subframes and aperiodic allocation of DL subframes may be possible. The signaling method pertaining to DL subframe allocation may be reported by using the (E)PDCCH, by using higher layer signaling (RRC signaling, broadcast signals, etc.), or by combining these. Hereinafter, DL subframes where cell-specific DL signals are allocated will be also referred to as "cell-specific DL subframes."

However, no matter which allocation is employed, there is nevertheless a possibility that cell-specific DL subframe allocation blocks PUSCH retransmissions. In particular, this is a significant problem in periodic allocation.

This problem will be described with reference to FIG. 5. FIG. 5 is a diagram to show an example of a case where a cell-specific DL subframes and UL HARQ collide in a dynamic TDD cell in conventional HARQ scheduling. In FIG. 5, cell-specific DL signals are transmitted using DL subframes, which are allocated in a 10-subframe cycle.

FIG. 5 shows an example case where a user terminal transmits data using the PUSCH in a UL subframe (the third subframe from the left in FIG. 5) that is designated a predetermined number of subframes (for example, four subframes) after a timing a UL grant is received, and the radio base station transmits a NACK in response to that PUSCH. Normally, a user terminal having received a NACK retransmits the PUSCH in a predetermined retransmission timing, in the case of FIG. 5, the subframe at the retransmission timing is a cell-specific DL subframe, and therefore the PUSCH cannot be retransmitted in this timing. Here and hereinafter, a retransmission timing refers to a subframe in which uplink data might be retransmitted.

Also, the PUSCH retransmission in FIG. 5, if carried out forcibly, interferes with cell-specific DL signals, which makes it difficult to execute synchronization and quality measurements adequately. That is, the problem when conventional UL HARQ scheduling is applied to enhanced dynamic TDD is that, if a PUSCH retransmission and a cell-specific DL subframe come up at the same time, one of these must be given up.

In example 2 of the present embodiment, HARQ scheduling is executed so that the timings of PUSCH retransmissions and cell-specific DL subframes do not collide. Example 2 can be further divided into the following four (example 2.1 to example 2.4).

In an example 2.1, cell-specific DL subframes are scheduled to be transmitted in timings not colliding with UL retransmissions. When cell-specific DL subframes are allocated periodically, if, for example, UL HARQ is carried out in an 8-ms cycle, then the DL subframes are configured in a cycle of 8X-ms (a multiple of 8 ms) (for example, in a 40-ms cycle). Then, by allocating cell-specific DL subframes to different timings from those in the UL HARQ cycle, collisions can be avoided.

Also, even when cell-specific DL subframes are allocated to arbitrary subframes, as noted above, collisions can be avoided by making subframes where UL transmissions cannot take place DL subframes.

In an example 2.2, subframes in which UL retransmissions take place are moved to timings where the subframes do not collide with cell-specific DL subframes. For example, it is possible to change the retransmission interval (PHICH (Physical HARQ Indicator CHannel) transmission timing or the PUSCH transmission timing), or employ asynchronous HARQ. Here, asynchronous HARQ refers to HARQ in which the retransmission interval is not fixed.

When the retransmission interval is changed, arrangements may be made so that timings can be reported through signaling, or it is equally possible to configure predetermined retransmission intervals that are different from existing HARQ retransmission intervals in user terminals in advance. For example, although, normally, the PUSCH is transmitted four ms after the PHICH is received, changes may be made so that the PUSCH is transmitted five ms or six ms later instead.

Also, although user terminals execute asynchronous HARQ when the PHICH that is detected carries an ACK and information to command a UL retransmission is included in the PDCCH (for example, when an NDI (New Data Indicator) that is included in the PDCCH does not specify new data), this is by no means limiting. For example, user terminals may be structured to make decisions for UL retransmissions based on the PDCCH, not the PHICH. In this case, information regarding application of asynchronous HARQ may be signaled in advance.

Also, when using asynchronous HARQ, a UE receives a UL grant to command a retransmission at an arbitrary timing that is a predetermined period of time (for example, four ms) or more after the PUSCH is transmitted.

Note that the change of the retransmission interval or the signaling in asynchronous HARQ may be both reported by using the (E)PDCCH, by using higher layer signaling (RRC signaling, broadcast signals, etc.), or by combining these.

To summarize above example 2.1 and example 2.2, at least one of downlink subframes for receiving cell-specific downlink signals from a dynamic TDD cell and subframes for retransmitting uplink data from the dynamic TDD cell is changed, so that a control to make both subframes mutually different can be realized.

In an example 2.3, retransmissions take place in designated CCs. In other words, although the initial transmission of uplink data is carried out in an enhanced dynamic TDD cell, retransmissions of this uplink data take place in other cells. Here, the CCs to use upon retransmissions are reported by way of signaling from the PCC.

This signaling may be reported by using the (E)PDCCH, by using higher layer signaling (RRC signaling, broadcast signals, etc.), or by combining these.

In an example 2.4, UL HARQ is not supported (made invalid) in an enhanced dynamic TDD cell. By this means, UL retransmissions do not occur, and, so that collisions with cell-specific DL subframes can be prevented. In particular, in a small-coverage environment such as small cells, example 2.4 is suitable.

Information regarding the fact that UL HARQ is not supported may be reported by using higher layer signaling (RRC signaling, broadcast signals, etc.), or may be configured in user terminals in advance so as not to execute UL HARQ in enhanced dynamic TDD.

Note that, for the scheduling of UL HARQ pertaining to enhanced dynamic TDD, one of example 2.1 to example 2.4 may be used, or a configuration to avoid collisions by combining example 2.1 to example 2.3 may be employed.

As described above, according to example 2 of the radio communication method of the present embodiment, HARQ scheduling is executed so that the timings of PUSCH retransmissions and cell-specific DL subframes do not collide. This configuration allows reception without blocking cell-specific DL signals such as synchronization signals and quality measurement signals, so that stable communication can be realized. Also, since uplink data signals can be retransmitted in desired timings, it is possible to reduce the decrease of system throughput.

### (Example 3)

An example 3 according to the present embodiment provides DL HARQ scheduling that is suitable for enhanced dynamic TDD of example 1.

Transmitting the PUCCH (HARQ-ACK) pertaining to an enhanced dynamic TDD cell to the PCC (macro cell) is not efficient from the following perspectives: First, usually, the PCC is likely to be located in a place that is physically more distant than where an SCC is, so that greater transmission power is required, and the battery consumption of user terminals grows. Also, when the number of SCCs (small cells) which a user terminal connects with increases, more PUCCH resources of the PCC are consumed, and the PUCCH resources of the PCC run short.

Meanwhile, when the PUCCH is transmitted to SCCs, not the PCC, the operation of dynamic TDD becomes complex. Also, when SCCs use unlicensed bands, sufficient quality cannot be secured.

In view of the above, the problem when applying conventional DL HARQ scheduling to enhanced dynamic TDD is that it is necessary to reduce the PUCCHs to transmit for enhanced dynamic TDD cells (SCCs).

Note that, UCI other than HARQ-ACK is not much of a problem even when enhanced dynamic TDD is employed. To be more specific, CSI can be triggered by a UL grant and transmitted aperiodically using the PUSCH, and therefore can be transmitted outside the PUCCH. Furthermore, a scheduling request is not transmitted for SCCs alone, and therefor is not a problem.

In example 3 according to the present embodiment, HARQ scheduling is executed so as to avoid transmitting PUCCHs (HARQ-ACK) pertaining to enhanced dynamic TDD to the PCC as much as possible. Example 3 can be further divided into the following three (example 3.1 to example 3.3).

In an example 3.1, HARQ-ACK is transmitted in the PUSCH. It is equally possible to execute signaling that matches UL grants, at the same time with downlink scheduling (cross-carrier scheduling) from the PCC to SCCs, and transmit HARQ-ACK in the PUSCH. In this case, if the PDSCH is allocated by the above signaling to a timing where the PUCCH is transmitted, it is possible to transmit HARQ-ACK using this PDSCH. It is also possible to include, in the above signaling, information that specifies subframes in which HARQ-ACK is transmitted using the PUSCH, or set the transmission timings of the above signaling in different subframes from those in downlink scheduling and include indicators to represent the corresponding PDSCHs in the above signaling.

Also, example 3.1 may be structured to report the HARQ-ACK-transmitting resource blocks in predetermined subframes from the PCC to user terminals in advance, by using higher layer signaling (RRC signaling, broadcast signals, etc.), so that the user terminals can transmit HARQ-ACK in the PUSCH, without UL grants.

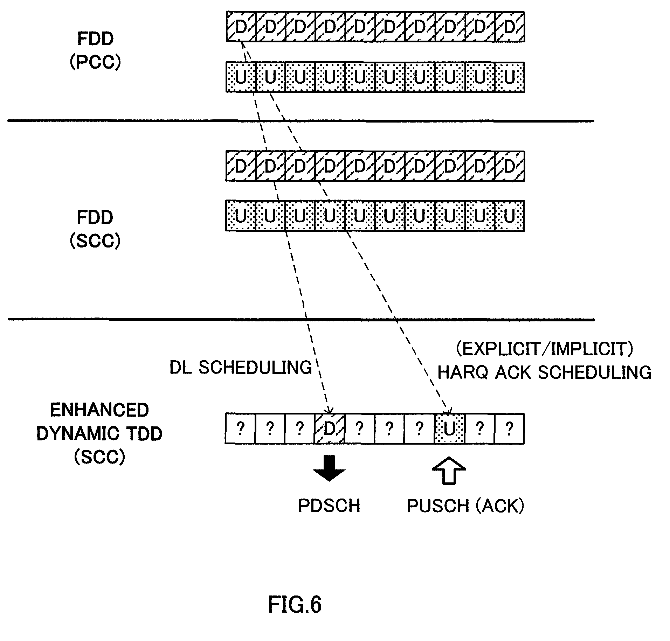

FIG. 6 is a diagram to show an example of a case where, in the radio communication method of the present embodiment, PUSCH (HARQ-ACK) is transmitted in an SCC to use enhanced dynamic TDD. In this example, the user terminal is connected with two cells, and FIG. 6 shows a predetermined period of subframes in a PCC to use FDD and in an SCC to use enhanced dynamic TDD.

In the first DL subframe from the left in the PCC, DL scheduling to make the fourth subframe from the left in the SCC using enhanced dynamic TDD a DL subframe is carried out.

With example 3.1, information to command an HARQ-ACK transmission four subframe later is explicitly reported at the same time with this DL scheduling, so that HARQ-ACK is transmitted in the PUSCH of the eighth UL subframe from the left in the above SCC.

Also, according to example 3.1, a command to use predetermined resource blocks in the eighth subframe from the left in the SCC for HARQ-ACK is reported in advance from the PCC through higher layer signaling and so on, so that it is possible to allocate HARQ-ACK to the above resource blocks and transmit this in the PUSCH, implicitly, without relying upon UL grants.

In an example 3.2, CCs to transmit HARQ-ACK in the PUCCH are signaled from the PCC. This signaling may be reported by using the (E)PDCCH, by using higher layer signaling (RRC signaling, broadcast signals, etc.) or by combining these.

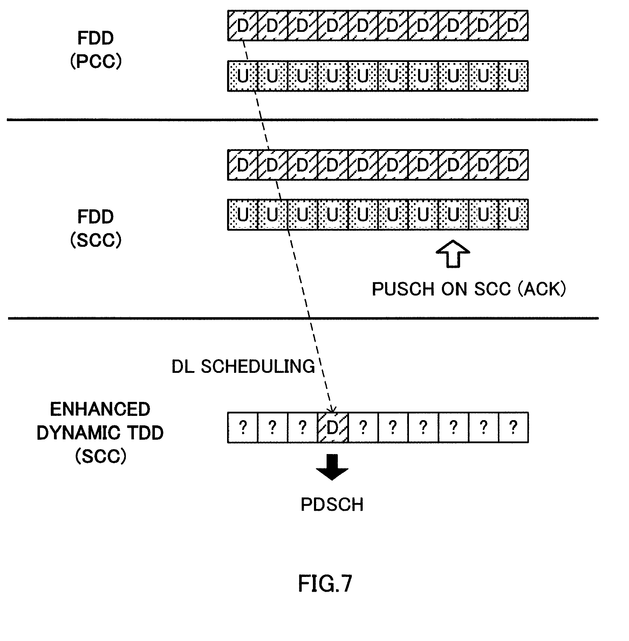

FIG. 7 is a diagram to show an example of a case where, in the radio communication method of the present embodiment, the PUCCH (HARQ-ACK) is transmitted in an SCC apart from the SCC where enhanced dynamic TDD is used. In this example, the user terminal is connected with three cells, and FIG. 7 shows a predetermined period of subframes in a PCC to use FDD, an SCC to use FDD and an SCC to use enhanced dynamic TDD.

Similar to FIG. 6, in the first DL subframe from the left in the PCC, DL scheduling to make the fourth subframe from the left in the SCC using enhanced dynamic TDD a DL subframe is carried out.

Also, in accordance with example 3.2, the SCC to use FDD is additionally reported from the PCC as the CC to transmit HARQ-ACK in the PUCCH. By this means, the user terminal transmits HARQ-ACK in the PUSCH of the eighth UL subframe from the left in the SCC using FDD.

In an example 3.3, DL HARQ is not supported (made invalid) in an enhanced dynamic TDD cell. By this means, it is not necessary to transmit HARQ-ACK on the uplink, so that it is possible to prevent PUCCH transmissions for the enhanced dynamic TDD cell.

Information regarding the fact that DL HARQ is not supported may be reported through higher layer signaling (RRC signaling, broadcast signals, etc.), or may be configured in user terminals in advance so as not to execute DL HARQ in enhanced dynamic TDD.

Note that the scheduling of DL HARQ pertaining to enhanced dynamic TDD may use one of example 3.1 to example 3.3, or may be configured to reduce the PUCCHs that are transmitted for the enhanced dynamic TDD cell, by combining example 3.1 and example 3.2.

As described above, according to example 3 of the radio communication method of the present embodiment, HARQ scheduling is executed to reduce the PUCCHs that are transmitted to the PCC for an enhanced dynamic TDD cell (SCC). This configuration makes it possible to reduce the uplink transmission power of user terminals, so that it is possible to minimize the use of PUCCH resources in the PCC by off-loading HARQ-ACK apart from the FDD cell (PCC). Also, since the PUCCH is not transmitted the in enhanced dynamic TDD cell, the operation of dynamic TDD becomes simple, and the cost of implementing user terminals can be reduced.

Note that, for the scheduling of HARQ pertaining to enhanced dynamic TDD, it is possible to use one of examples 2 and 3, or it is equally possible to use both examples 2 and 3 and execute scheduling that is suitable for both UL HARQ and DL HARQ.

### (Structure of Radio Communication System)

Now, a structure of a radio communication system according to the present embodiment will be described below. In this radio communication system, the above-described radio communication methods according to example 2 and/or example 3 is employed.

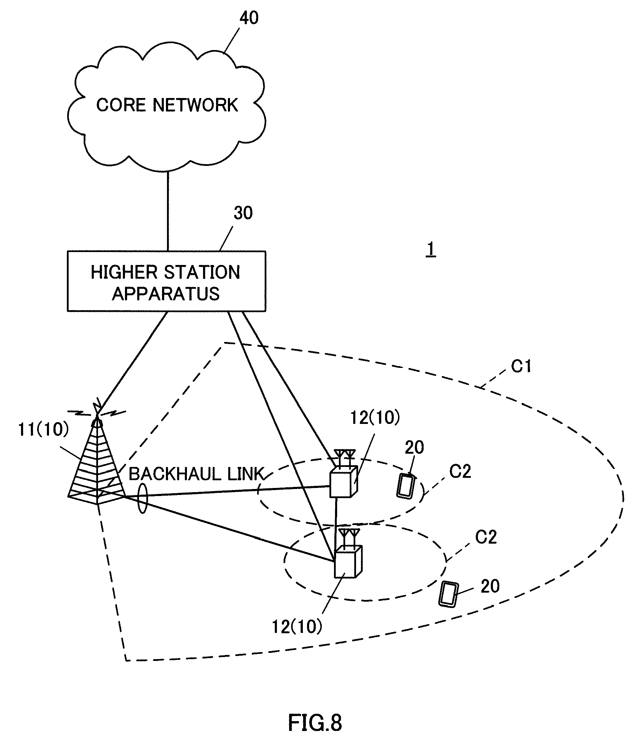

FIG. 8 is a schematic structure diagram to show an example of the radio communication system according to the present embodiment. As shown in FIG. 8, a radio communication system 1 is comprised of a plurality of radio base stations 10 (11 and 12), and a plurality of user terminals 20 that are present within cells formed by each radio base station 10, and that are configured to be capable of communicating with each radio base station 10. The radio base stations 10 are each connected with a higher station apparatus 30, and are connected to a core network 40 via the higher station apparatus 30.

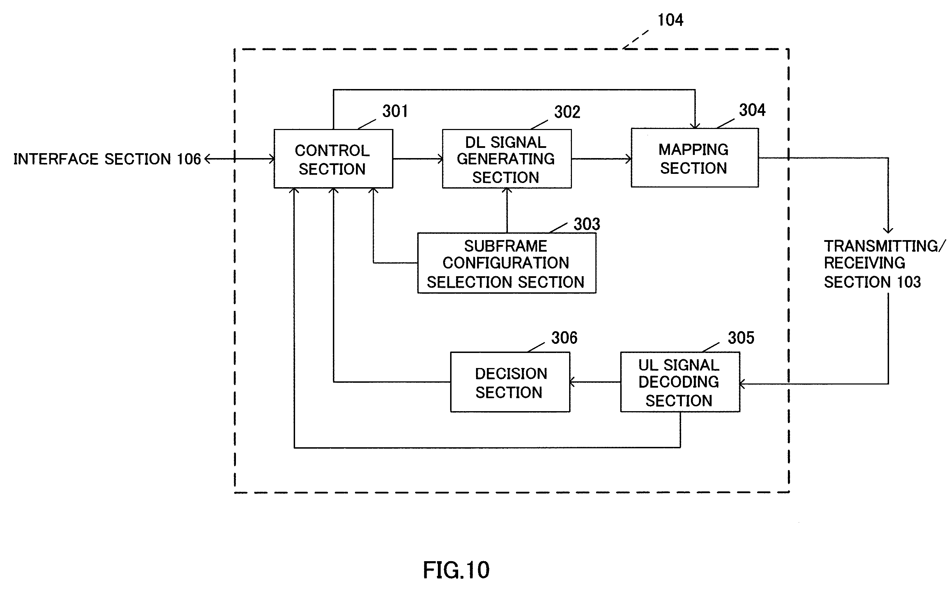

In FIG. 8, the radio base station 11 is, for example, a macro base station having a relatively wide coverage, and forms a macro cell C1. The radio base stations 12 are, for example, small base stations having local coverages, and form small cells C2. Note that the number of radio base stations 11 and 12 is not limited to that shown in FIG. 10.

In the macro cell C1 and the small cells C2, the same frequency band may be used, or different frequency bands may be used. Also, the macro base stations 11 and 12 are connected with each other via an inter-base station interface (for example, optical fiber, the X2 interface, etc.).

Between the radio base station 11 and the radio base stations 12, between the radio base station 11 and other radio base stations 11, or between the radio base stations 12 and other radio base stations 12, dual connectivity mode (DC) or carrier aggregation (CA) is employed.

User terminals 20 are terminals to support various communication schemes such as LTE, LTE-A and so on, and may include both mobile communication terminals and stationary communication terminals. The user terminals 20 can communicate with other user terminals 20 via the radio base stations 10.

Note that the higher station apparatus 30 may be, for example, an access gateway apparatus, a radio network controller (RNC), a mobility management entity (MME) and so on, but is by no means limited to these.

In the radio communication system 1, a downlink shared channel (PDSCH: Physical Downlink Shared Channel), which is used by each user terminal 20 on a shared basis, downlink control channels (PDCCH (Physical Downlink Control Channel), EPDCCH (Enhanced Physical Downlink Control Channel), etc.), a broadcast channel (PBCH) and so on are used as downlink channels. User data, higher layer control information and predetermined SIBs (System Information Blocks) are communicated in the PDSCH. Downlink control information (DCI) is communicated in the PDCCH and the EPDCCH. Furthermore, synchronization signals, MIBs (Master Information Blocks) and so on are communicated by the PBCH.

Also, in the radio communication system 1, an uplink shared channel (PUSCH: Physical Uplink Shared Channel), which is used by each user terminal 20 on a shared basis, an uplink control channel (PUCCH: Physical Uplink Control Channel) and so on are used as uplink channels. User data and higher layer control information are communicated in the PUSCH.

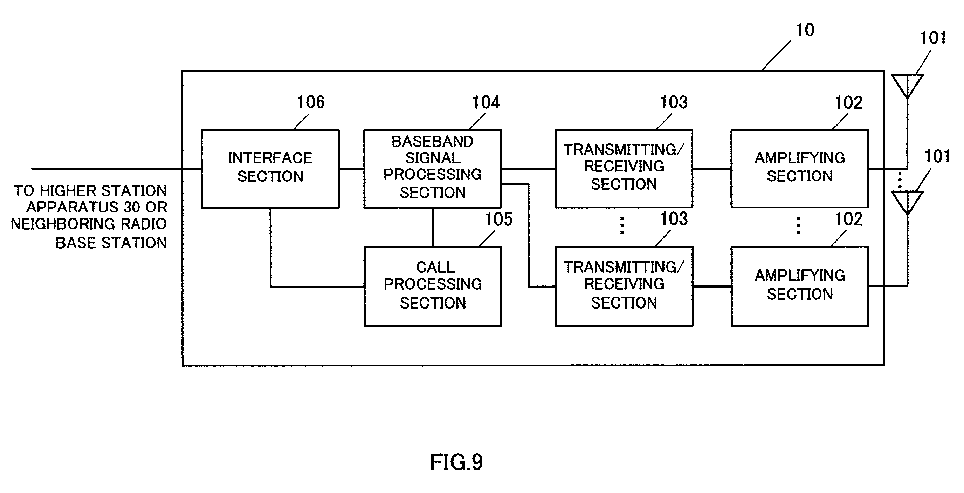

FIG. 9 is a diagram to show an overall structure of a radio base station 10 according to the present embodiment. The radio base station 10 has a plurality of transmitting/receiving antennas 101 for MIMO communication, amplifying sections 102, transmitting/receiving sections 103 (transmitting sections), a baseband signal processing section 104, a call processing section 105 and an interface section 106.

User data to be transmitted from the radio base station 10 to a user terminal 20 on the downlink is input from the higher station apparatus 30, into the baseband signal processing section 104, via the interface section 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control signals are also subjected to transmission processes such as channel coding and an inverse fast Fourier transform, and forwarded to each transmitting/receiving section 103.

The baseband signal processing section 104 reports control information for allowing the user terminal 20 to communicate in the cell, via MAC layer signaling, physical layer signaling or higher layer signaling including RRC signaling. This control information includes, for example, information about the DL subframe and UL subframe configurations that are used in a TDD cell.

Each transmitting/receiving section 103 converts the downlink signals, pre-coded and output from the baseband signal processing section 104 on a per antenna basis, into a radio frequency band. The amplifying sections 102 amplify the radio frequency signals having been subjected to frequency conversion, and transmit the resulting signals through the transmitting/receiving antennas 101.

On the other hand, as for uplink signals, radio frequency signals that are received in the transmitting/receiving antennas 101 are each amplified in the amplifying sections 102, converted into the baseband signal through frequency conversion in each transmitting/receiving section 103, and input into the baseband signal processing section 104.

Each transmitting/receiving section 103 functions as a transmission section that transmits control information, including information about the DL subframe and UL subframe configurations to use in an enhanced dynamic TDD cell, by MAC layer signaling.

In the baseband signal processing section 104, the user data that is included in the input uplink signals is subjected to an FFT process, an IDFT process, error correction decoding, a MAC retransmission control receiving process, and RLC layer and PDCP layer receiving processes, and the result is forwarded to the higher station apparatus 30 via the interface section 106. The call processing section 105 performs call processing such as setting up and releasing communication channels, manages the state of the radio base station 10 and manages the radio resources.

The interface section 106 transmits and receives signals to and from neighboring radio base stations (backhaul signaling) via an inter-base station interface (for example, optical fiber, the X2 interface, etc.). Alternatively, the interface section 106 transmits and receives signals to and from the higher station apparatus 30 via a predetermined interface.

FIG. 10 is a diagram to show a principle functional structure of the baseband signal processing section 104 provided in the radio base station 10 according to the present embodiment. As shown in FIG. 10, the baseband signal processing section 104 provided in the radio base station 10 is comprised at least of a control section 301, a DL signal generating section 302, a subframe configuration selection section 303 (selection section), a mapping section 304, a UL signal decoding section 305 and a decision section 306. The radio base station 10 according to the present embodiment forms the primary cell, which is an FDD cell, but this is by no means limiting.

The control section 301 controls the scheduling of downlink user data that is transmitted in the PDSCH, downlink control information that is transmitted in one or both of the PDCCH and the enhanced PDCCH (EPDCCH), downlink reference signals and so on. Also, the control section 301 controls the scheduling of RA preambles that are transmitted in the PRACH, uplink data that is transmitted in the PUSCH, uplink control information that is transmitted in the PUCCH or the PUSCH, and uplink reference signals (allocation control). Information about the allocation control is reported to the user terminal 20 by using downlink control signals (DCI).

The control section 301 controls the allocation of radio resources to downlink signals and uplink signals based on command information from the higher station apparatus 30, feedback information from each user terminal 20 and so on. That is, the control section 301 functions as a scheduler. The control section 301 controls each section in accordance with the scheduling result determined.

When a user terminal 20 connects with a dynamic TDD carrier of a secondary cell (SCC), the control section 301 controls the allocation of DL signals and UL signals to each subframe based on the DL subframe and UL subframe configurations selected in the configuration selection section 303 (example 1).

Also, when a user terminal 20 connects with an enhanced dynamic TDD carrier of a secondary cell (SCC), the control section 301 schedules UL HARQ in accordance with example 2 of the present embodiment and schedules DL HARQ in accordance with example 3.

To be more specific, the control section 301 controls the scheduling of UL HARQ so that the timings of PUSCH retransmissions in the enhanced dynamic TDD cell and DL subframes (cell-specific DL subframes) to receive cell-specific DL signals do not collide (example 2).

For example, the control section 301 may carry out scheduling so that the user terminal 20 transmits cell-specific DL subframes in timings not colliding with UL retransmissions (example 2.1). Also, the control section 301 may control the user terminal 20 to change the UL retransmission timings to timings not colliding with cell-specific DL subframes (example 2.2). Also, the control section 301 may execute scheduling so that the user terminal 20 carries out UL retransmissions in designated cells (example 2.3). Also, the control section 301 may control the user terminal 20 not to support (make invalid) UL HARQ in an enhanced dynamic TDD cell (example 2.4).

Note that the control section 301 may control the scheduling of UL HARQ pertaining to enhanced dynamic TDD by using one of example 2.1 to example 2.4, or by using the combination of example 2.1 to example 2.3.

Furthermore, the control section 301 controls the scheduling of DL HARQ so that the user terminal 20 transmits delivery acknowledgment signals (HARQ-ACK) in response to the enhanced dynamic TDD cell's DL subframes to cells other than the primary cell (example 3).

For example, the control section 301 may execute scheduling so that the user terminal 20 transmits HARQ-ACK in the enhanced dynamic TDD cell's PUSCH (example 3.1). Also, the control section 301 may execute scheduling so that the user terminal 20 transmits HARQ-ACK in a predetermined cell's PUCCH (example 3.2). Also, the control section 301 may control the user terminal 20 not to support (make invalid) DL HARQ in an enhanced dynamic TDD cell (example 3.3).

Note that the control section 301 may control the scheduling of DL HARQ pertaining to enhanced dynamic TDD by using one of example 3.1 to example 3.3, or by using the combination of example 3.1 and example 3.2.

The DL signal generating section 302 generates the downlink control signals, downlink data signals and downlink reference signals that are determined to be allocated in the control section 301. To be more specific, the DL signal generating section 302 generates DL assignments, which report the allocation of DL signals, and UL grants, which report the allocation of UL signals, based on commands from the control section 301. Also, the DL signal generating section 302 generates information about the subframe configurations selected in the subframe configuration selection section 303.

Also, the DL signal generating section 302 generates information about the UL HARQ and/or DL HARQ scheduling, which the user terminal 20 carries out with respect to the enhanced dynamic TDD carrier. Note that this scheduling-related information may be generated as downlink control information (DCI) to be reported by using the (E)PDCCH, or may be generated as information to be reported by using higher layer signaling (RRC signaling, broadcast signals, etc.).

The subframe configuration selection section 303 selects the subframe configuration to use in enhanced dynamic TDD in secondary cell by taking into account traffic and so on.

The mapping section 304 controls the allocation of the downlink control signals and the downlink data signals generated in the DL signal generating section 302 to radio resources based on commands from the control section 301.

The UL signal decoding section 305 decodes the feedback signals such as delivery acknowledgement signals transmitted from the user terminals in the uplink control channel, and outputs the results to the control section 301. The uplink data signal decoding section 308 decodes the uplink data signals transmitted from the user terminals in the uplink shared channel, and outputs the results to the decision section 306.

The decision section 306 makes retransmission control decisions based on the decoding results in the UL signal decoding section 305, and outputs the decisions to the control section 301.

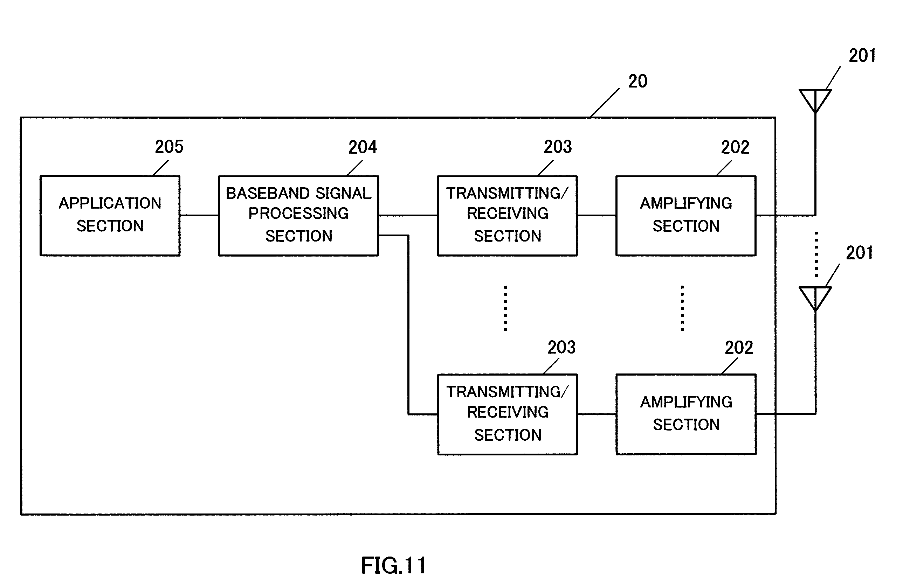

FIG. 11 is a diagram to show an overall structure of a user terminal 20 according to the present embodiment. As shown in FIG. 11, the user terminal 20 has a plurality of transmitting/receiving antennas 201 for MIMO communication, amplifying sections 202, transmitting/receiving sections (receiving sections) 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into the baseband signal in the transmitting/receiving sections 203. This baseband signal is subjected to an FFT process, error correction decoding, a retransmission control receiving process and so on in the baseband signal processing section 204. In this downlink data, downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. In the baseband signal processing section 204, a retransmission control (HARQ: Hybrid ARQ) transmission process, channel coding, precoding, a DFT process, an IFFT process and so on are performed, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signal having been subjected to frequency conversion, and transmit the resulting signal from the transmitting/receiving antennas 201.

When the user terminal 20 connects with an enhanced dynamic TDD cell being a secondary cell, the transmitting/receiving sections 203 function as receiving sections to receive control information including dynamic commands for the dynamic TDD cell's subframe configurations, transmitted from the primary cell. Also, the transmitting/receiving sections 203 function as receiving sections to receive information about the HARQ (UL HARQ and/or DL HARQ) scheduling in the enhanced dynamic TDD cell, controlled based on the above control information. Note that this scheduling-related information can also so be seen as control information, so that these are all handled as control information in the radio base station 10 and the user terminal 20.

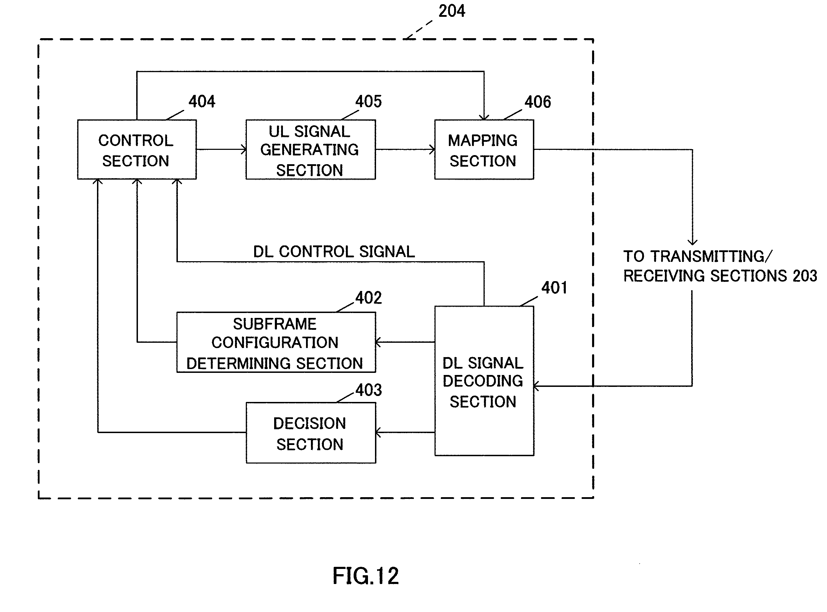

FIG. 12 is a diagram to show a principle functional structure of the baseband signal processing section 204 provided in the user terminal 20. As shown in FIG. 14, the baseband signal processing section 204 provided in the user terminal 20 is comprised at least of a DL signal decoding section 401, a subframe configuration determining section 402, a decision section 403, a control section 404, a UL signal generating section 405 and a mapping section 406.

The DL signal decoding section 401 decodes the downlink control signals transmitted in the downlink control channel, and outputs the scheduling information to the control section 404. The DL signal decoding section 401 decodes the downlink data signals transmitted in the downlink shared channel, and outputs the results to the decision section 403.

The subframe configuration determining section 402 identifies the control information related to the DL subframes and UL subframes of the enhanced dynamic TDD cell being a secondary cell, reported from the primary cell (the radio base station 10). The subframe configuration determining section 402 outputs the information about the enhanced dynamic TDD cell's DL subframes and UL subframes to the control section 404 (example 1). The subframe configuration determining section 402 and the control section 404 constitute the control section of the user terminal according to the present embodiment.

The decision section 403 makes retransmission control decisions based on the decoding results yielded in the DL signal decoding section 401, and, furthermore, outputs the decisions to the control section 404. For example, if a PDSCH that is received is properly decoded in the DL signal decoding section 401, an indication to the effect that this PDSCH needs not be retransmitted is output to the control section 404.

The control section 404 controls the generation of uplink control signals (including HARQ-ACK), uplink data signals and so on based on the downlink control signals (PDCCH signals) transmitted from the radio base station 10, retransmission control decisions in response to the PDSCH signals received, and so on.

The control section 404 controls the transmission of uplink signals (uplink control signals, uplink data signals and uplink reference signals) and downlink signals (downlink control signals, downlink data signals and downlink reference signals) based on the information about the enhanced dynamic TDD cell's DL subframe and UL subframe configurations, output from the subframe configuration determining section 402. The control section 404 controls operations pertaining to the enhanced dynamic TDD cell, including, for example, measurements, CSI measurements, RACH transmission, UCI feedback and sounding, based on commands from the primary cell (the radio base station 10).

Based on control information such as information about the DL subframe and UL subframe configurations for the enhanced dynamic TDD cell, which is output from the subframe configuration determining section 402, and information that is included in other signaling reported from the primary cell (radio base station 10), the control section 404 executes control so that the DL subframes (cell-specific DL subframes) to receive enhanced dynamic TDD cell-specific DL signals (synchronization signals, measurement reference signals and so on) and the subframes where uplink data that has been transmitted in the UL subframes of the enhanced dynamic TDD cell may be retransmitted become different subframes (example 2).

To be more specific, the control section 404 can change and control the cell-specific DL subframes to be different from the subframes which can retransmit uplink data based on the control information (example 2.1). For example, the control section 404 may execute control so that the cell-specific downlink signals are received from the enhanced dynamic TDD cell in a cycle of a multiple of the uplink data retransmission timing cycle, based on signaling to include information related to the cycle of cell-specific DL subframes. In this case, an offset may be applied to the starting subframe of the DL subframes so as to prevent the cell-specific DL subframes and the uplink data retransmission timings from overlapping. For example, it is possible to execute control so that the minimum interval between the cell-specific DL subframes and the subframes to be uplink data retransmission timings becomes the offset value.

Also, the control section 404 can change and control the subframes to retransmit uplink data to be different from the cell-specific DL subframes based on the control information (example 2.2). For example, the control section 404 may change the retransmission interval (PHICH transmission timing or PUSCH transmission timing) based on signaling to include information about the retransmission interval. Also, the control section 404 may employ asynchronous HARQ based on signaling to include information about the application of asynchronous HARQ. Also, it is equally possible to employ a configuration for making decisions for UL retransmissions based on the PDCCH, not the PHICH.

Also, the control section 404 can perform UL retransmissions in cells specified by the primary cell, based on control information (example 2.3). For example, the control section 404 may execute control so that uplink data is retransmitted to cells apart from an enhanced dynamic TDD cell, based on signaling including information about the cells (CCs) to use for retransmissions.

Also, the control section 404 may execute control so that UL HARQ is not supported (made invalid) in an enhanced dynamic TDD cell (example 2.4). For example, based on signaling including information about the fact that UL HARQ is not supported, the control section 404 may make UL HARQ invalid in the enhanced dynamic TDD cell, or may configure UL HARQ invalid in advance, without using signaling.

Note that the control section 404 may control the scheduling of UL HARQ pertaining to enhanced dynamic TDD by using one of example 2.1 to example 2.4, or by using the combination of example 2.1 to example 2.3.

Furthermore, based on control information such as information about the DL subframe and UL subframe configurations for the enhanced dynamic TDD cell, which is output from the subframe configuration determining section 402, and information that is included in other signaling reported from the primary cell (radio base station 10), the control section 404 executes control so that delivery acknowledgment signals (HARQ-ACK) in response to the enhanced dynamic TDD cell's DL subframes are transmitted to cells other than the primary cell (example 3).

To be more specific, the control section 404 can execute control so that HARQ-ACK is transmitted as uplink data by using the PUSCH of the enhanced dynamic TDD cell, based on control information (example 3.1). For example, the control section 404 may execute control so that HARQ-ACK is transmitted in the PUSCH of the enhanced dynamic TDD cell, based on signaling which matches UL grants, and which is reported at the same time with downlink scheduling (cross-carrier scheduling) from the PCC to SCCs. Also, the control section 404 may execute control so that HARQ-ACK is transmitted in the PUSCH of a predetermined subframe of the enhanced dynamic TDD cell, based on signaling including information about the resource blocks for transmitting HARQ-ACK, without UL grants. Note that it is equally possible to employ a configuration to transmit HARQ-ACK in the PUSCH of cells apart from the enhanced dynamic TDD cell, based on signaling.

Also, the control section 404 can control HARQ-ACK to be transmitted as an uplink control signal by using a predetermined cell's PUCCH, based on control information (example 3.2). For example, the control section 404 may execute control so that HARQ-ACK is transmitted in the PUCCH of a predetermined cell, based on signaling including information about the cells (CCs) that transmit HARQ-ACK in the PUCCH.

Also, the control section 404 may execute control so that DL HARQ is not supported (made invalid) in an enhanced dynamic TDD cell (example 3.3). For example, based on signaling including information about the fact that UL HARQ is not supported, the control section 404 may make UL HARQ invalid in the enhanced dynamic TDD cell, or may configure UL HARQ invalid in advance, without using signaling.

Note that the control section 404 may control the scheduling of DL-HARQ pertaining to enhanced dynamic TDD by using one of example 3.1 to example 3.3, or by using the combination of example 3.1 and example 3.2.

The UL signal generating section 405 generates uplink control signals such as, for example, delivery acknowledgement signals and feedback signals, based on commands from the control section 404. The UL signal generating section 405 generates retransmission signals of uplink data signal and uplink data signals based on commands from the control section 404. Also, uplink reference signals may be generated as well. When a DL-only carrier is configured as a configuration for an enhanced dynamic TDD cell, the UL signal generating section 405 generates uplink control signals for DL signals, without generating uplink data signals.

The mapping section 406 controls the allocation of the uplink control signals and the uplink data signals to radio resources based on commands from the control section 404.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2014-004464, filed on January 14, 2014, including the specification, drawings and abstract, is incorporated herein by reference in its entirety.

## Claims

1. A user terminal that, by employing carrier aggregation or dual connectivity, performs radio communication via a plurality of cells including a primary cell, which is an FDD cell, and a secondary cell, which is a dynamic TDD cell, the user terminal comprising:
a receiving section that receives control information transmitted from the primary cell, and a cell-specific downlink signal transmitted from the dynamic TDD cell; and
a control section that decides whether one or a plurality of subframes in the dynamic TDD cell are uplink subframes or downlink subframes based on the control information, and controls operations with respect to the dynamic TDD cell, wherein the control section executes control so that a subframe to receive the cell-specific downlink signal from the dynamic TDD cell and a subframe to retransmit uplink data are different.

2. The user terminal according to claim 1, wherein the control section changes and controls at least one of the downlink subframe to receive the cell-specific downlink signal and the subframe to retransmit the uplink data based on the control information.

3. The user terminal according to claim 1 or claim 2, wherein the control section executes control so that the uplink data is retransmitted to a cell apart from the dynamic TDD cell, based on the control information.

4. A user terminal that, by employing carrier aggregation or dual connectivity, performs radio communication with a plurality of cells including a primary cell, which is an FDD cell, and a secondary cell, which is a dynamic TDD cell, the user terminal comprising:
a receiving section that receives control information transmitted from the primary cell; and
a control section that decides whether one or a plurality of subframes in the dynamic TDD cell are uplink subframes or downlink subframes based on the control information, and controls operations with respect to the dynamic TDD cell,
wherein the control section executes control so that a delivery acknowledgment signal in response to the downlink subframe is transmitted outside the primary cell.

5. The user terminal according to claim 4, wherein the control section executes control so that the delivery acknowledgment signal is transmitted to the dynamic TDD cell as uplink data based on the control information.

6. The user terminal according to claim 4 or claim 5, wherein the control section executes control so that the delivery acknowledgment signal is transmitted to a secondary cell that is different from the dynamic TDD cell, as uplink control information, based on the control information.

7. A radio base station that performs radio communication with a user terminal by employing carrier aggregation or dual connectivity, the radio base station comprising:
a selection section that, when the user terminal connects with a secondary cell, which is a dynamic TDD cell, selects a subframe configuration of the dynamic TDD cell;
a control section that controls transmission and reception between the user terminal and the dynamic TDD cell based on the subframe configuration; and
a transmission section that reports control information, which includes the subframe configuration, and a cell-specific downlink signal, which is transmitted from the dynamic TDD cell, to the user terminal,
wherein the control section executes control so that a subframe in which the user terminal receives the cell-specific downlink signal from the dynamic TDD cell and a subframe in which the user terminal retransmits uplink data are different.

8. A radio base station that performs radio communication with a user terminal by employing carrier aggregation or dual connectivity, the radio base station comprising:
a selection section that, when the user terminal connects with a secondary cell, which is a dynamic TDD cell, selects a subframe configuration of the dynamic TDD cell;
a control section that controls transmission and reception between the user terminal and the dynamic TDD cell based on the subframe configuration; and
a transmission section that reports control information, which includes the subframe configuration, to the user terminal,
wherein the control section controls the user terminal to transmit a delivery acknowledgement signal in response to the downlink subframe outside the primary cell.

9. A radio communication method for a user terminal that, by employing carrier aggregation or dual connectivity, performs radio communication via a plurality of cells including a primary cell, which is an FDD cell, and a secondary cell, which is a dynamic TDD cell, the radio communication method comprising the steps of:
receiving control information transmitted from the primary cell, and a cell-specific downlink signal transmitted from the dynamic TDD cell; and
deciding whether one or a plurality of subframes in the dynamic TDD cell are uplink subframes or downlink subframes based on the control information, and controlling operations with respect to the dynamic TDD cell,
wherein control is executed so that a subframe to receive the cell-specific downlink signal from the dynamic TDD cell and a subframe to retransmit uplink data are different.

10. A radio communication method for a user terminal that, by employing carrier aggregation or dual connectivity, performs radio communication via a plurality of cells including a primary cell, which is an FDD cell, and a secondary cell, which is a dynamic TDD cell, the radio communication method comprising the steps of:
receiving control information transmitted from the primary cell; and
deciding whether one or a plurality of subframes in the dynamic TDD cell are uplink subframes or downlink subframes based on the control information, and controlling operations with respect to the dynamic TDD cell,
wherein control is executed so that a delivery acknowledgment signal in response to the downlink subframe is transmitted outside the primary cell.
